(19) Europäisches Patentamt
European Patent Office
Office européen des brevets

(11) **EP 1 528 791 A1**

(12) **EUROPÄISCHE PATENTANMELDUNG**

(43) Veröffentlichungstag:
04.05.2005 Patentblatt 2005/18

(51) Int Cl.⁷: **H04N 1/60**, H04N 9/73

(21) Anmeldenummer: 03300181.9

(22) Anmeldetag: 29.10.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Thomson Licensing S.A.**
**92100 Boulogne-Billancourt (FR)**

(72) Erfinder: **Anderle, Klaus**
**64289 Darmstadt (DE)**

(74) Vertreter: **Rossmanith, Manfred, Dr.**
**Deutsche Thomson-Brandt GmbH**
**European Patent Operations**
**Karl-Wiechert-Allee 74**
**30625 Hannover (DE)**

(54) **Verfahren zur Farbkorrektur von digitalen Bilddaten**

(57) Es wird ein Verfahren zur Farbkorrektur von digitalen Bilddaten vorgeschlagen, die durch spektrale Absorption von weißem Licht in Farbfiltern eines ersten Darstellungsmittels erzeugt werden. Als erstes Darstellungsmittel kommt insbesondere Farbfilmmaterial in Betracht. Zunächst werden hierfür die primären Farbwerte R, G, B der Bilddaten auf dem Farbfilm erfasst. Diese primären Farbwerte R, G, B werden korrigiert um sekundäre Farbwerte R', G', B' zu erzeugen, welche auf ein zweites Darstellungsmittel bezogen sind, zum Beispiel einem Monitor. Bei dieser Korrektur wird die Absorption von Licht in Nebendichten der Farbstoffe des Filmmaterials berücksichtigt, welche die Farbfilter des ersten Darstellungsmittels bilden. Hierfür werden mehrere Absorptionsspektren für unterschiedliche Dichten der Farbstoffe erzeugt. Der spektrale Verlauf der Absorptionsspektren der Farbstoffe fließt schließlich in die Korrektur der primären Farbwerte zur Erzeugung der sekundären Farbwerte ein. Hiermit wird das Ziel verfolgt, eine möglichst große Übereinstimmung zwischen der Farbdarstellung mit dem ersten Darstellungsmittel und der Farbdarstellung mit dem zweiten Darstellungsmittel zu erreichen.

Fig.2

EP 1 528 791 A1

## Beschreibung

Die Erfindung betrifft ein Verfahren sowie eine Einrichtung zur Farbkorrektur von digitalen Bilddaten. Insbesondere betrifft die Erfindung ein Verfahren und eine Einrichtung zur Farbkorrektur von digitalen Bilddaten, die durch spektrale Absorption von weißem Licht in Farbfiltern eines Farbfilms erzeugt werden.

Für den Betrachter einer Film- oder Fernsehproduktion ist neben der Bildschärfe der subjektive Farbeindruck von entscheidender Bedeutung. Bei der Herstellung der Produktionen wird deshalb angestrebt, dass die Farben bei der Wiedergabe im Kino und/oder auf einem Fernsehbildschirm möglichst so erscheinen, wie es der Regisseur beabsichtigt hat. Mit der Nachbearbeitung von Film- oder Bildmaterial wird unter anderem dieses Ziel angestrebt. Voraussetzung für eine effiziente Nachbearbeitung ist, dass zum Beispiel die Farbdarstellung auf den Monitoren eines Coloristen möglichst genau mit dem beispielsweise in einem Kino projizierten Bild übereinstimmt. Ausgangspunkt für die Nachbearbeitung sind heute in der Regel digitalisierte Bilddaten, die von Filmabtastern oder elektronischen Kameras erzeugt werden. Hinzu kommen von Computern generierte Bild, die von Anfang an als digitale Bilddaten vorliegen.

Einrichtungen, die eine solche Übereinstimmung von Farbdarstellungen mit unterschiedlichen Darstellungsmitteln anstreben, sind bereits kommerziell als Software- und Hardware-Lösungen erhältlich. Diesen Einrichtungen liegen die nachfolgend beschriebenen Überlegungen zu Grunde.

Farben entstehen auf unterschiedlichen Wiedergabemedien in unterschiedlicher Weise. Seit frühesten Zeiten ist es aus der Malerei bekannt, dass aus nur drei verschiedenen Pigmenten, nämlich Gelb, Blaugrün und Purpurrot alle Zwischenfarbtöne durch Mischen der genannten Primärfarben herstellbar sind. Unter Primärfarben werden solche Farben verstanden, die sich nicht aus anderen Farben mischen lassen, aber aus denen alle anderen Farben mischbar sind. Heute bezeichnet man in der Farbenlehre diese Art der Farbmischung als subtraktive Farbmischung. Der Begriff der subtraktiven Farbmischung leitet sich aus dem Umstand ab, dass eine Pigmentschicht bestimmte spektrale Anteile von einfallendem weißem Licht absorbiert und andere reflektiert, wodurch beim Betrachter der Farbeindruck entsteht. Andere Arten der Farbmischung waren zunächst nicht bekannt.

Erst lange Zeit später hat Isaak Newton erkannt, dass auch die Spektralfarben des Lichtes, die sogenannten Farbstimuli, mischbar sind. Bei dieser Art von Farbmischung spricht man von additiver Mischung im Unterschied zu der oben erläuterten subtraktiven Farbmischung bei Pigmenten. Die additive Farbmischung wird von relativ einfachen Regeln beherrscht, den sogenannten Grassmann-Gesetzen, die auch für selbstleuchtende Bildschirme, wie zum Beispiel Monitore auf Basis von Kathodenstrahlröhren gelten.

Ein Sonderfall der subtraktiven Farbmischung ist die Kombination oder Überlagerung von optischen Filtern. Die Transmission der Filterkombination ist gleich dem Produkt der jeweiligen Transmissionen der einzelnen Filter, weshalb man in diesem Fall auch von multiplikativer Farbmischung spricht. Diese letztgenannte Art der Farbmischung ist auch für die Farbwiedergabe bei der Projektion von Farbfilmen maßgeblich, die drei unterschiedliche übereinander liegende Farbschichten aufweisen.

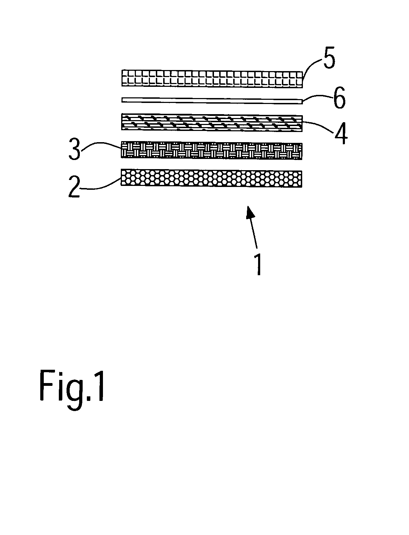

Fig. 1 zeigt schematisch ein Beispiel für den Aufbau eines Farbfilmes 1 im Querschnitt. Ein Schichtträger 2 trägt drei Farbschichten 3, 4, 5 der Grundfarben Rot, Grün und Blau, wobei die rotempfindliche Farbschicht 3 an den Schichtträger 2 angrenzt und die blauempfindliche Farbschicht 5 die oberste Farbschicht bildet. Zwischen der blauempfindlichen und der grünempfindlichen Farbschicht 5 bzw. 4 liegt ein Gelbfilter 6. Die einzelnen Schichten sind in Fig. 1 zur besseren Veranschaulichung mit einem Abstand dargestellt, grenzen aber in Wirklichkeit aneinander an. Die Zwischenschicht zur Verhinderung der Interdiffusion der grünempfindlichen und rotempfindlichen Farbstoffe wird hier nicht berücksichtigt und in Fig. 1 nicht dargestellt, da sie keinen Einfluss auf das Farbverhalten des Filmes besitzt, der für die vorliegende Erfindung wesentlich ist.

Ein wichtiger Unterschied zwischen additiver und multiplikativer Farbmischung ist, das die Grassmann-Gesetze nicht auf die multiplikative Farbmischung anwendbar sind. Der Grund hierfür ist darin zu suchen, dass beispielsweise mit zunehmender Dicke eines Cyan-Filters nicht nur die Transmission im roten Spektralbereich abnimmt, sondern auch in erheblichem Umfang im grünen Spektralbereich. Diese Tatsache und die sich daraus ergebenden Konsequenzen werden weiter unten im einzelnen dargelegt. In bekannten Farbkorrektur-Systemen wird deshalb die Absorption von Testmustern ("Test patches") mit Hilfe von Densitometern gemessen und die Absorption in den Nebendichten durch eine Transformation der Farbkoordinaten korrigiert.

In der Praxis hat es sich jedoch gezeigt, dass trotz dieser Maßnahmen die Übereinstimmung von Farben bei der Wiedergabe mit unterschiedlichen Darstellungsmitteln nicht immer erreicht wird.

Aus diesem Grund besteht weiterhin Bedarf für eine Einrichtung und ein Verfahren zur Farbkorrektur, mit denen gegenüber dem Stand der Technik eine verbesserte Übereinstimmung der Farben bei der Wiedergabe mit verschiedenen Darstellungsmitteln erzielt wird.

Diese Aufgabe wird durch ein Verfahren nach Anspruch 1 gelöst.

Das erfindungsgemäße Verfahren dient zur Farbkorrektur von digitalen Bilddaten, die durch spektrale Absorption von weißem Licht in Farbfiltern eines ersten Darstellungsmittels erzeugt werden. Zunächst werden die primären Farbwerte der Bilddaten erfaßt, wobei die primären Farbwerte auf das erste Darstellungsmittel bezogen sind. Dann werden die primären Farbwerte korrigiert, um sekundäre Farbwerte zu erzeugen, welche auf ein zweites Darstellungsmittel bezogen sind und welche die Absorption von Licht in Nebendichten der Farbfilter berücksichtigen. Erfindungsgemäß werden mehrere Absorptionsspektren für unterschiedliche Dichten wenigstens eines Farbfilters erzeugt. Hierauf aufbauend fließt der spektrale Verlauf der Absorptionsspektren der Farbfilter in die Korrektor der primären Farbwerte zur Erzeugung der sekundären Farbwerte ein.

Ein Vorteil des Verfahrens ist, dass damit eine bessere Übereinstimmung der Farbwiedergabe zwischen dem ersten und dem zweiten Darstellungsmittel erzielt wird.

In einer Weiterbildung der Erfindung werden aus den mehreren Absorptionsspektren für unterschiedliche Dichten des Farbfilters Zwischenspektren berechnet werden. Dabei kann es zweckmäßig sein, wenn für alle Farbfilter mehrere Absorptionsspektren erzeugt werden.

In diesem Fall können für alle Farbfilter Zwischenspektren berechnet werden. Dadurch stehen mehr Daten für die Korrektur der Farbwerte zur Verfügung, was sich grundsätzlich günstig auf die angestrebte Übereinstimmung der Farbdarstellungen auswirken kann.

Schließlich kann es vorgesehen sein, die Spektren der Farbfilter mit der spektralen Wahrnehmungskurve eines Normbeobachters zu falten, um die sekundären Farbwerte zu erzeugen. Auf diese Weise ist es möglich die physiologische Wahrnehmung von Farben durch das menschliche Auge zu berücksichtigen.

In der Zeichnung sind Sachverhalte veranschaulicht, die zum besseren Verständnis der Erfindung dienen. Es zeigen:

     Fig. 1 die Struktur eines Farbfilms schematisch und im Querschnitt,
     Fig. 2 den Aufbau des Arbeitsplatzes eines Coloristen in stark vereinfachter Form,
     Fig. 3 die spektrale Dichte der blauen, grünen und roten Farbschicht eines Farbfilms,
     Fig. 4 ein Ablaufdiagramm des erfindungsgemäßen Verfahrens und
     Fig. 5 Farbkoordinaten als Funktion von Code Values.

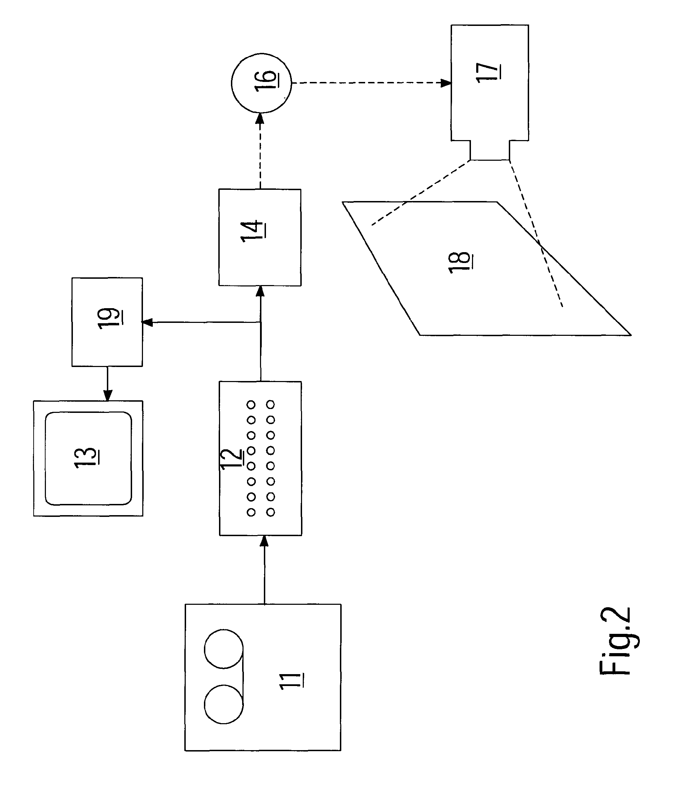

In Fig. 2 ist der Arbeitsplatz eines Coloristen in stark vereinfachter Form dargestellt. Bei der Filmproduktion wird von dem ursprünglich von der Kamera belichteten Filmmaterial eine erste Kopie hergestellt. Die Kopie dient zur Herstellung weiterer Abzüge, die den Ausgangspunkt für die Nachbearbeitung des Films bilden. In Fig. 2 ist ein solcher Abzug in einem Filmabtaster 11 eingelegt. Bei der Abtastung des Abzuges werden die fotografischen Bildinformationen in digitale Bilddaten umgewandelt und einer Einrichtung 12 zur Farbkorrektur zugeführt, die üblicherweise von einem Coloristen bedient wird. Bei der Korrektur des Filmmaterials betrachtet der Kolorist das zu bearbeitende Bild auf einem Monitor 13. Die Farbdarstellung auf dem Monitor 13 wird von Farbwerten am Ausgang der Farbkorrektureinrichtung bestimmt. Die Farbwerte am Ausgang der Farbkorrektureinrichtung 12 werden auch als Steuerbefehle oder "Code Values" an einen Filmbelichter 14 weitergegeben, der die Daten auf einen Internegativfilm belichtet. Der Inhalt des Internegativfilms wird dann mittels einer Kontaktkopie auf einen Positivfilm übertragen. Der Positivfilm ist in Fig. 2 durch eine Filmspule 16 symbolisiert. Zur Ergebniskontrolle des belichteten Films wird dieser mit einem Filmprojektor 17 auf eine Leinwand 18 projiziert. Idealerweise stimmt die Farbdarstellung eines auf die Leinwand 18 projizierten Bildes mit der Farbdarstellung desselben Bildes auf dem Monitor 13 überein. Zur Annäherung an diesen Idealfall ist eine Einrichtung 19 zum Abgleichen der Farbkoordinaten zwischen die Farbkorrektureinrichtung 12 und dem Monitor 13 geschaltet. Die Abgleichseinrichtung 19 wandelt die an dem Filmbelichter 14 gesandten "Code Values" in Farbkoordinaten für den Monitor 13 um. Die Umwandlung hat das Ziel, möglichst identische Farbdarstellungen auf dem Monitor 13 bzw. der Leinwand 18 zu erhalten. Das Umwandlungsverfahren und die Umwandlungseinrichtung 19 werden im folgenden in größerer Einzelheit beschrieben.

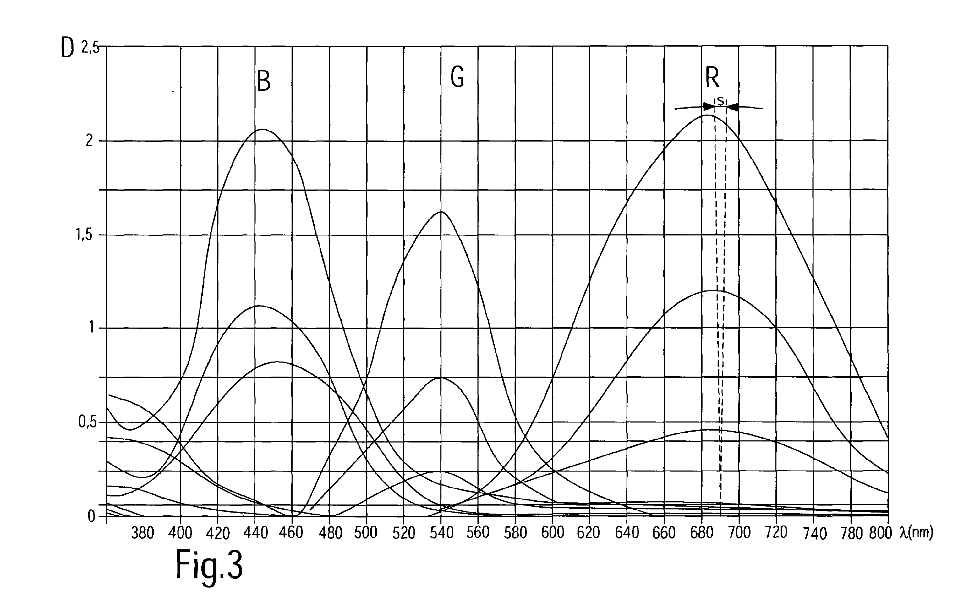

In Fig. 3 sind Spektralkurven von jeweils drei Farbfiltern unterschiedlicher Dichte für die Farben Rot, Grün und Blau dargestellt. Auf der Ordinate ist die Dichte D aufgetragen und auf der Abszisse die Wellenlängen in Nanometer (nm). Die Dichte D eines Filters leitet sich aus dessen Transmission T gemäß folgender Formel ab:

$$D = -\log (T).$$

Das bedeutet, dass bei der Dichte Null das betreffende Filter vollkommen transparent ist, und dass mit ansteigender Dichte die Transmission abnimmt. Für jede der Primärfarben Rot, Grün und Blau sind Dichtekurven für Filter mit verschiedenen Transmissionen aufgetragen. Es ist deutlich zu sehen, dass beispielsweise für die Dichtekurven das Rotfilter nennenswerte Nebenmaxima im blauen Spektralbereich um 400 nm auftreten, die zu einer für den Farbeindruck erheblichen Absorption führen. Dasselbe gilt in geringeren Umfang für die Dichtekurven der Grünfilter. Die Dichtekurven für die Blaufilter fallen im Wellenlängenbereich zwischen 440 nm und 380 nm steil ab, um unterhalb von 380 nm wieder anzusteigen. Darüber hinaus zeigen die Dichtekurven der Blaufilter mit zunehmender Dichte ein immer stärker ausgeprägtes Plateau im grünen Spektralbereich um 550 Nanometer, wobei das Plateau bis in den roten Spektralbereich hineinragt. Die Absorption eines Primärfarbfilters in anderen Spektralbereichen als dem der jeweiligen Primärfarbe zugeordneten Spektralbereich wird als "Nebendichte" der Dichtekurve bezeichnet und führt zum Beispiel bei der multiplikativen Farbmischung bei der Projektion von Farbfilmen zu Farbverschiebungen. Diese Effekte sind im Prinzip bekannt und werden beispielsweise durch eine lineare Transformation der Farbkoordinaten korrigiert. Um besser zu verstehen, inwieweit die Erfindung über die bekannten Verfahren hinausgeht, ist es zunächst erforderlich auf das herkömmliche Korrekturverfahren näher einzugehen.

Unterschiedliche Filmmaterialien unterscheiden sich unter anderem in den Absorptionseigenschaften der Farbstoffe, was es erforderlich macht, die in Fig. 2 gezeigte Farbkorrektureinrichtung 12 auf ein bestimmtes Filmmaterial abzugleichen. Zu diesem Zweck belichtet der Filmbelichter 14 mit vorgegebenen Code Values sogenannte "Test Patches", d. h. Bildfenster mit unterschiedlichen Farben und Farbdichten. Dieses Filmmaterial wird danach kopiert und ergibt den eigentlichen Film. Die Test Patches werden sodann mit Densitometern ausgemessen, um die Absorption eines Farbstoffes in bestimmten Wellenlängenfenstern zu ermitteln. Die Messcharakteristik der Densitometer bestimmt sich gemäß DIN 4512 -3 oder einer entsprechenden internationalen Norm bei. Daraus ergibt sich die Absorption der Farbstoffe nicht nur in den Hauptmaxima, sondern auch in den Nebenmaxima. Die auf diese Weise ermittelten Werte bilden die Grundlage für die nachfolgende Transformation der Farbwerte, welche die Darstellung auf dem Monitor 13 des Coloristen festlegen. Die transformierten Farbwerte sind korrigierte Farbwerte, welche die Beleuchtungsbefehle des Filmbelichters 14 festlegen und somit die nachfolgende Farbdarstellung auf der Leinwand 18 bestimmen. In anderen Worten ausgedrückt, werden die Farbwerte oder Code Values, die den Filmbelichter 14 steuern "vorverzerrt" um den "verzerrenden" Einfluss der Farbstoffe des verwendeten Filmmaterials zu kompensieren.

In der Praxis hat es sich jedoch gezeigt, dass die auf diese Weise angestrebte Übereinstimmung der Farbdarstellung auf dem Monitor 13 und der Leinwand 18 immer noch Wünsche offen lässt. Der Zweck der Erfindung ist es, diese Übereinstimmung zu verbessern.

Die Erfindung setzt zur Verwirklichung dieses Ziels bei der Bestimmung der Korrekturwerte an. Aus der genaueren Betrachtung der in Fig. 3 gezeigten spektralen Dichtekurven der Farbfilter sind weitere Eigenschaften der Farbstoffe ableitbar, die zu Farbverschiebungen führen. Diese Eigenschaften sind mit den in der Praxis benutzten Densitometermessungen jedoch nicht erkennbar. Denn herkömmliche Densitometer gestatten nur eine integrale Betrachtung der Absorptionseigenschaften der Farbstoffe. Bei genauerer Betrachtung der spektralen Absorptionskurven ist für alle Primärfarben mit zunehmender Dichte eine Verschiebung der Hauptmaxima zu kürzeren Wellenlängen hin zu erkennen. Diese Verschiebung S ist am Beispiel des Hauptmaximums für Rot in Fig. 3 dargestellt. Des weiteren ändert sich auch die Form der Dichtekurven als Funktion der Dichten. Genauso können so die spektralen Einflüsse von besonderen Filmbehandlungen während des Kopierprozesses und der Entwicklung bestimmt und entsprechend beschrieben werden.

Diese Änderungen werden bei herkömmlichen Densitometermessungen nur als Änderung der Absorption in dem jeweiligen Messfenster registriert. Aus diesem Grund ist es mit Densitometermessungen unmöglich, die tatsächliche Absorption bei einer bestimmten Wellenlänge zu ermitteln. Für eine möglichst genaue Übereinstimmung der Farbdarstellung auf unterschiedlichen Darstellungsmitteln kommt es aber genau hierauf an.

Erfindungsgemäß wird deshalb vorgeschlagen, die Test Patches der Filmmaterialien mit einem Spektrometer über den gesamten Wellenlängenbereich auszumessen und aus den so gewonnenen Spektren Zwischenspektren zu interpolieren. Aus der Gesamtheit der Spektren lassen sich für die drei Primärfarben Tabellen ableiten, die einen Farbwert, der die Darstellung auf dem Monitor 13 des Coloristen bestimmt, in Beziehung zu einem Code Value des Filmbelichters 14 setzt. Insgesamt entsteht auf diese Weise eine dreidimensionale Tabelle.

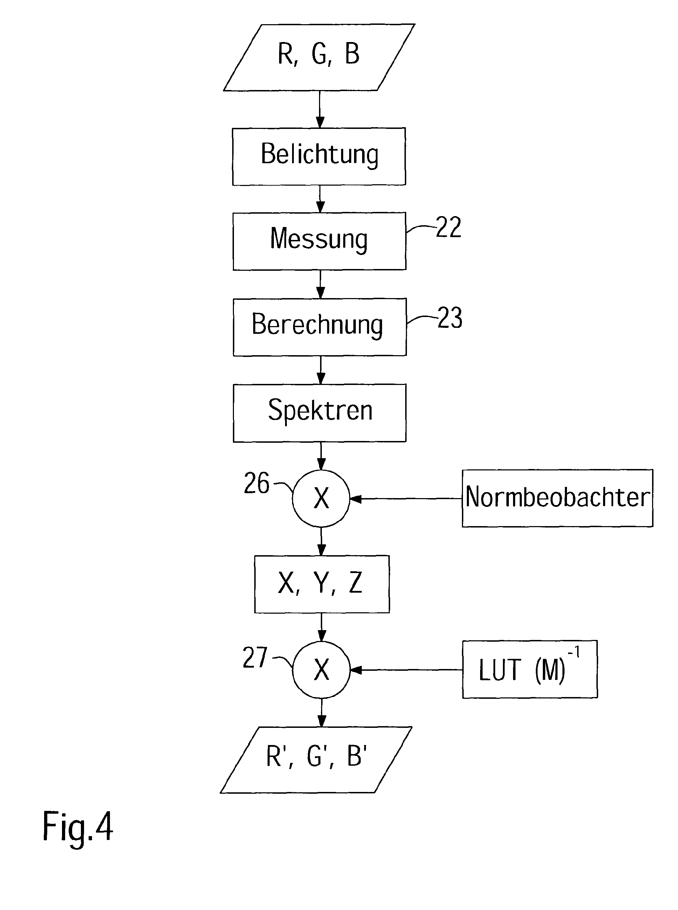

Das erfindungsgemäße Verfahren wird mit Bezug auf Fig. 4 nachfolgend in größerer Einzelheit beschrieben. Ausgangspunkt bilden RGB-Farbwerte, die von der Farbkorrektureinrichtung 12 zum einen an den Monitor 13 und zum anderen an den Filmbelichter 14 abgegeben werden. Um eine standarisierte Farbwiedergabe auf dem Monitor 13 zur erzielen, ist in der Abgleichseinrichtung 19 eine sogenannte look-up Tabelle für den Monitor LUT (M) abgelegt, welche die Wiedergabeeigenschaften des Monitors berücksichtigt. Gemäß dem Ablaufdiagramm in Fig. 4 wird der Film in dem Filmbelichter entsprechend dieser RGB-Werte belichtet. Dieser wird danach auf das zu projizierende Material kopiert. Die auf diese Weise erzeugten Farbmuster oder Patches werden in einem Schritt 22 spektral ausgemessen. Zusätzlich zu diesen gemessenen Spektren werden in einem Schritt 23 weitere Zwischenspektren berechnet. Die Gesamtheit der auf diese Weise erzeugten Spektren wird mit den Wahrnehmungskurven eines Normbeobachters in einem Schritt 26 gefaltet, um den RGB-Werten entsprechende Farbkoordinaten X, Y, Z zu erzeugen. Die Farbkoordinaten X, Y, Z werden schließlich in einem Schritt 27 mit einer "invertierten" Look-up Tabelle des Monitors LUT(M) $^{-1}$ verknüpft. Hieraus entstehen neue Farbwerte R', G', B'. Aus den Unterschieden zwischen den Farbwerten R, G, B und R', G', B' ist der Einfluss des Filmmaterials auf die Farbwiedergabe ableitbar. Aus diesen Unterschieden werden deshalb weitere Look-up Tabellen erzeugt, die in der Abgleichseinrichtung 19 abgespeichert und zur Anwendung auf die Farbwerte RGB bereitgehalten werden. Auf diese Weise wird erreicht, dass die Farbdarstellung auf dem Monitor 13 mit der Farbdarstellung auf der Leinwand 18 sehr gut übereinstimmt.

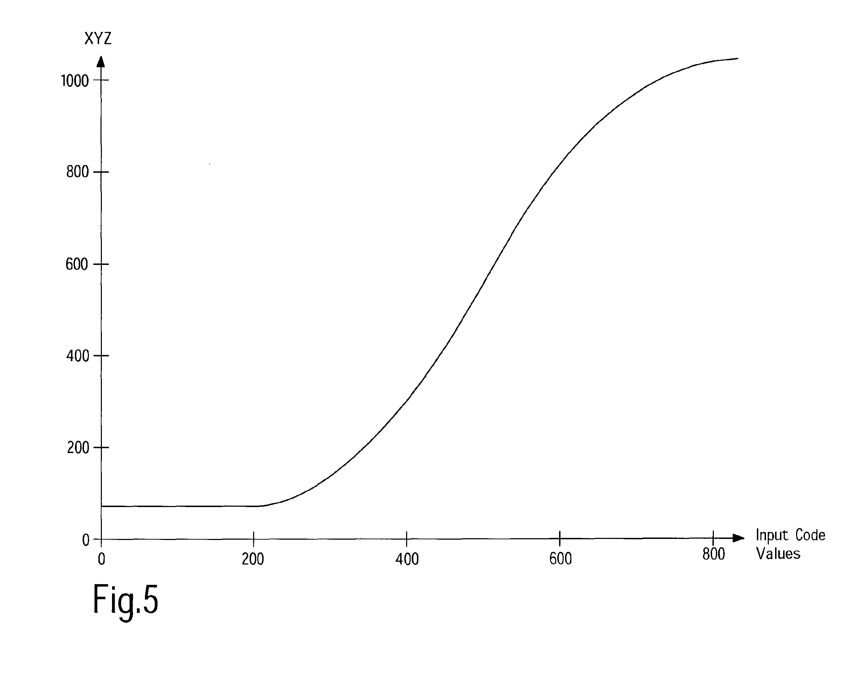

Fig. 5 zeigt den Verlauf einer der Farbkoordinaten X, Y, Z als Funktion der Code Values des Filmbelichters. Die Farbkoordinaten werden aus der Transmission von Grau-Patches auf dem Filmmaterial ausgemessen. Das Ergebnis gestattet eine Aussage über die Dichteverteilung der als Funktion der Code Values, was bei der Berechnung der korrigierten Farbwerte R', G', B' ebenfalls berücksichtigt wird.

## Patentansprüche

1. Verfahren zur Farbkorrektur von digitalen Bilddaten, die durch spektrale Absorption von weißem Licht in Farbfiltern eines ersten Darstellungsmittels erzeugt werden, wobei das Verfahren die folgenden Schritte umfasst:

     (a) Erfassen der primären Farbwerte der Bilddaten, wobei die primären Farbwerte (R, G, B) auf das erste Darstellungsmittel bezogen sind,
     (b) Korrektur der primären Farbwerte, um sekundäre Farbwerte (R', G', B') zu erzeugen, welche auf ein zweites Darstellungsmittel bezogen sind und welche die Absorption von Licht in Nebendichten der Farbfilter berücksichtigen,
          **dadurch gekennzeichnet, dass**
     (c) mehrere Absorptionsspektren für unterschiedliche Dichten wenigstens eines Farbfilters erzeugt werden, und dass
     (d) der spektrale Verlauf der Absorptionsspektren der Farbfilter in die Korrektur der primären Farbwerte zur Erzeugung der sekundären Farbwerte einfließt.

2. Verfahren nach Anspruch 1, **dadurch gekennzeichnet, dass** aus den mehreren Absorptionsspektren für unterschiedliche Dichten des Farbfilters Zwischenspektren berechnet werden.

3. Verfahren nach Anspruch 1, **dadurch gekennzeichnet, dass** für alle Farbfilter mehrere Absorptionsspektren erzeugt werden.

4. Verfahren nach Anspruch 2 und 3, **dadurch gekennzeichnet, dass** für alle Farbfilter Zwischenspektren berechnet werden.

5. Verfahren nach Anspruch 4, **dadurch gekennzeichnet, dass** die Spektren der Farbfilter mit der spektralen Wahrnehmungskurve eines Normbeobachters gefaltet werden, um die sekundären Farbwerte zu erzeugen.

6. Verfahren nach Anspruch 4, **dadurch gekennzeichnet, dass** die Transmission von Graufiltern unterschiedlicher Dichte des ersten Darstellungsmittels ausgemessen wird, um die Dichteverteilung unterschiedlicher Farbstoffe in dem ersten Darstellungsmittel zu bestimmen.

5

6

4

3

2

1

Fig.1

Fig.2

Fig.3

EP 1 528 791 A1

Fig.4

Fig.5

**Europäisches Patentamt**

**EUROPÄISCHER RECHERCHENBERICHT**

Nummer der Anmeldung

EP 03 30 0181

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 00 26857 A (PIXAR ANIMATION STUDIOS) 11. Mai 2000 (2000-05-11) | 1,3 | H04N1/60 H04N9/73 |
| A | * Seite 6, Zeile 6 - Seite 7, Zeile 11; Abbildung 1 * | 5,6 | |
| | --- | | |
| X | WO 00 54213 A (DAVIS LEMUEL L ;RAMAMURTHY ARJUN (US); TIME WARNER ENTERTAINM CO L) 14. September 2000 (2000-09-14) * Seite 20, Zeile 21 - Seite 21, Zeile 4; Abbildung 8C * | 1 | |
| | --- | | |
| A | EP 1 237 379 A (EASTMAN KODAK CO) 4. September 2002 (2002-09-04) * Abbildungen 1-5 * | | |
| | --- | | |
| A | US 2002/180361 A1 (FUJINO SHIGERU ET AL) 5. Dezember 2002 (2002-12-05) ----- | | |

RECHERCHIERTE SACHGEBIETE (Int.Cl.7)

H04N

Der vorliegende Recherchenbericht wurde für alle Patentansprüche erstellt

| Recherchenort | Abschlußdatum der Recherche | Prüfer |
|---|---|---|
| MÜNCHEN | 26. März 2004 | Seytter, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                EP 03 30 0181

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2004

| Im Recherchenbericht angeführtes Patentdokument | Datum der Veröffentlichung | Mitglied(er) der Patentfamilie | Datum der Veröffentlichung |
|---|---|---|---|
| WO 0026857 A | 11-05-2000 | US 6697519 B1<br>AU 1204900 A<br>WO 0026857 A1 | 24-02-2004<br>22-05-2000<br>11-05-2000 |
| WO 0054213 A | 14-09-2000 | AU 1806500 A<br>WO 0054213 A1 | 28-09-2000<br>14-09-2000 |
| EP 1237379 A | 04-09-2002 | US 2002163657 A1<br>EP 1237379 A2<br>JP 2002374541 A | 07-11-2002<br>04-09-2002<br>26-12-2002 |
| US 2002180361 A1 | 05-12-2002 | JP 2002300594 A<br>DE 10212394 A1 | 11-10-2002<br>24-10-2002 |

EPO FORM P0461

Für nähere Einzelheiten zu diesem Anhang : siehe Amtsblatt des Europäischen Patentamts, Nr.12/82